(19) Europäisches Patentamt
European Patent Office
Office européen des brevets

(11) EP 2 214 227 A1

(12) EUROPEAN PATENT APPLICATION
published in accordance with Art. 153(4) EPC

(43) Date of publication:
**04.08.2010 Bulletin 2010/31**

(21) Application number: **08841150.9**

(22) Date of filing: **23.10.2008**

(51) Int Cl.:
***H01M 2/16*** (2006.01) ***C08J 9/36*** (2006.01)
***H01M 4/02*** (2006.01) ***H01M 4/04*** (2006.01)
***H01M 10/40*** (0000.00)

(86) International application number:
**PCT/JP2008/069277**

(87) International publication number:
**WO 2009/054477 (30.04.2009 Gazette 2009/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.10.2007 JP 2007278614**

(71) Applicants:
- **Nitto Denko Corporation**
  **Ibaraki-shi, Osaka 567-8680 (JP)**
- **Sunstar Engineering Inc.**
  **Osaka 569-1134 (JP)**

(72) Inventors:
- **MURATA, Shuhei**
  **Ibaraki-shi**
  **Osaka 567-8680 (JP)**
- **FUJITA, Shigeru**
  **Ibaraki-shi**
  **Osaka 567-8680 (JP)**
- **TAKE, Hiroyoshi**
  **Ibaraki-shi**
  **Osaka 567-8680 (JP)**
- **UETANI, Yoshihiro**
  **Ibaraki-shi**
  **Osaka 567-8680 (JP)**

(74) Representative: **Grünecker, Kinkeldey, Stockmair & Schwanhäusser Anwaltssozietät**
**Leopoldstrasse 4**
**80802 München (DE)**

# (54) POROUS FILM HAVING REACTIVE POLYMER LAYER THEREON FOR USE IN BATTERY SEPARATOR, AND USE OF THE POROUS FILM

(57) The present invention relates to a reactive polymer layer-supported porous film for battery separator, including: a porous film substrate; and a reactive polymer layer supported on the porous film substrate, the reactive polymer layer having a thickness of 2 μm or less and being obtained by a crosslinking reaction between a polyfunctional isocyanate and a crosslinkable polymer having both a reactive group capable of reacting with an isocyanate group and a cationically polymerizable functional group in the molecule thereof, in which the reactive polymer layer has a plurality of through-holes having an average pore diameter of 5 μm or less.

EP 2 214 227 A1

## Description

### TECHNICAL FIELD

The present invention relates to a reactive polymer layer-supported porous film for battery separator and a use thereof.

### BACKGROUND ART

Lithium ion secondary batteries having a high energy density are extensively used in recent years as power sources for small portable electronic appliances such as cell phones and notebook type personal computers. Such a lithium ion secondary battery is produced through the steps of stacking or winding sheet-form positive and negative electrodes together with, for example, a porous polyolefin resin film, introducing the resultant stack into a battery container constituted of, for example, a metallic can, subsequently pouring an electrolyte solution into the battery container, and tightly sealing the opening of the battery container.

Recently, however, such small or portable electronic appliances are exceedingly strongly desired to be further reduced in size and weight Under these circumstance, lithium ion secondary batteries also are desired to be further reduced in thickness and weight. Battery containers of the laminated-film type have also come to be used in place of conventional metallic can cases.

Compared with the conventional metallic can cases, battery containers of the laminated-film type have a drawback that an areal pressure for keeping the distance between the positive and negative electrodes cannot be sufficiently applied to electrode surfaces. Because of this, these battery containers have a problem that the distance between the electrodes partly increases with the lapse of time due to the expansion/contraction of the electrode active materials during battery charge/discharge, resulting in an increase in the internal resistance of the battery and hence in a decrease in battery characteristics. In addition, there is a problem that unevenness of resistance occurs in the battery and this also reduces battery characteristics.

In the case of producing a sheet-form battery having a large area, there has been a problem that the distance between the electrodes cannot be kept constant and the internal resistance of the battery becomes uneven, making it impossible to obtain sufficient battery characteristics.

In order to overcome such problems, it has been proposed to bond electrodes to a separator with an adhesive resin layer including an electrolyte-solution phase, a polymer gel layer containing the electrolyte solution, and a solid polymer phase (see, for example, patent document 1).

Furthermore, a method has been proposed which includes coating a separator with a binder resin solution containing a poly(vinylidene fluoride) resin as a main component, stacking electrodes on the coated separator, drying the binder resin solution to form an electrode stack, introducing the electrode stack into a battery container, and then pouring an electrolyte solution into the battery container to obtain a battery in which the separator has been adhered to the electrodes (see, for example, patent document 2).

It has also been proposed to obtain a battery containing electrodes adhered to a separator, by bonding a separator impregnated with an electrolyte solution to positive and negative electrodes with a porous adhesive resin layer to bring the separator into close contact with the electrodes and cause the adhesive resin layer to hold the electrolyte solution in the through-holes thereof (see, for example, patent document 3).

However, those processes have had the following problem. The thickness of the adhesive resin layer must be increased in order to obtain sufficient adhesive force between the separator and each electrode. Because of this and because the amount of the electrolyte solution relative to that of the adhesive resin cannot be increased, the obtained battery has increased internal resistance. Consequently, sufficient cycle characteristics and sufficient high-rate discharge characteristics cannot be obtained.

Patent Document 1: JP-A-10-177865
Patent Document 2: JP-A-10-189054
Patent Document 3: JP-A-10-172606

### DISCLOSURE OF THE INVENTION

The invention has been achieved in order to overcome the problem described above which is encountered in the production of a battery containing electrodes adhered to a separator. An object of the invention is to provide a porous film having a reactive polymer layer supported thereon, the porous film being for use as a separator which attains sufficient adhesion between an electrode and the separator and which is suitable for use in producing a battery having low internal resistance and excellent high-rate characteristics. The invention further provides a process for battery

production in which the porous film having a reactive polymer layer supported thereon is used.

Namely, the present invention relates to the following (1) to (5).

(1) A reactive polymer layer-supported porous film for battery separator, including:

a porous film substrate; and
a reactive polymer layer supported on the porous film substrate, the reactive polymer layer having a thickness of 2 μm or less and being obtained by a crosslinking reaction between a polyfunctional isocyanate and a crosslinkable polymer having both a reactive group capable of reacting with an isocyanate group and a cationically polymerizable functional group in the molecule thereof,
in which the reactive polymer layer has a plurality of through-holes having an average pore diameter of 5 μm or less.

(2) The reactive polymer layer-supported porous film for battery separator according to (1), in which the reactive group capable of reacting with an isocyanate group is a hydroxyl group, and the cationically polymerizable functional group is at least one kind obtained from a 3-oxetanyl group and an epoxy group.
(3) A process for producing a battery, the process including:

stacking electrode on the reactive polymer layer-supported porous film according to (1) or (2) to obtain an electrode/reactive polymer layer-supported porous film stack;
introducing the electrode/reactive polymer layer-supported porous film stack into a battery container; and
pouring an electrolyte solution containing a cationic-polymerization catalyst into the battery container, whereby at least part of the reactive polymer is swelled in the electrolyte solution or dissolved in the electrolyte solution at least around the interface between the porous film and the electrode to undergo cationic polymerization, thereby adhering the porous film to the electrode.

(4) The process for producing a battery according to (3), in which the cationic-polymerization catalyst is an onium salt.
(5) The process for producing a battery according to (4), in which the electrolyte solution contains at least one kind selected from lithium hexafluorophosphate and lithium tetrafluoroborate, as an electrolyte salt serving also as a cationic-polymerization catalyst

Electrodes are stacked on the reactive polymer layer-supported porous film according to the invention to obtain an electrode/reactive polymer layer-supported porous film stack, and this stack is introduced into a battery container. Thereafter, an electrolyte solution containing a cationic-polymerization catalyst is poured into the battery container, whereby at least part of the reactive polymer is swelled in the electrolyte solution or dissolved in the electrolyte solution at least around the interface between the porous film and the electrodes to undergo cationic polymerization. As a result, a battery in which the porous film (separator) has been tenaciously adhered to the electrodes can be obtained.

Furthermore, according to the invention, since the reactive polymer layer has a plurality of fine through-holes, the reactive polymer layer has improved wettability by the electrolyte solution. A battery having excellent high-rate characteristics can hence be obtained. In addition, by regulating the through-holes of the reactive polymer layer so as to have an average pore diameter smaller than the particle diameters of the active materials included in the electrodes, high adhesive force can be obtained between the reactive polymer layer and each active material, i.e., between the separator and each electrode.

BEST MODE FOR CARRYING OUT THE INVENTION

The porous film substrate to be used in the invention preferably is one having a thickness in the range of 3 to 50 um. In case where the porous film has a thickness less than 3 nm, the porous film has insufficient strength and there is a possibility that use of this porous film as a separator in a battery might result in internal short-circuiting between the electrodes. On the other hand, in case where the porous film has a thickness exceeding 50 μm, the battery employing such a porous film as the separator has too large a distance between the electrodes, resulting in excessively high internal resistance of the battery.

The porous film substrate to be used may be one which has pores having an average pore diameter of 0.01 to 5 μm and has a porosity in the range of 20 to 95%. The porosity thereof is preferably in the range of 30 to 90%, most preferably in the range of 40 to 85%. In case where the porous film substrate has too low a porosity, use of this porous film substrate as a battery separator results in a decrease in the amount of ion conduction paths, making it impossible to obtain sufficient battery characteristics. On the other hand, in case where the porous film substrate has too high a porosity, this porous film has insufficient strength when used as a battery separator. Although it is necessary for obtaining

required strength to use such a porous film having a larger thickness, this is undesirable because the internal resistance of the battery increases.

Furthermore, the porous film substrate to be used may be one which has an air permeability of 1,500 see/100 cc or lower, preferably 1,000 sec/cc or lower. In case where the air permeability thereof is too high, this porous film substrate has low ionic conductivity when used as a battery separator, making it impossible to obtain sufficient battery characteristics.

With respect to the strength of the porous film substrate, it is preferred that the porous film substrate should have a puncture strength of 1 N or higher. This is because in case where the puncture strength thereof is lower than 1 N, there is a possibility that this substrate might break when an areal pressure is applied to between the electrodes, resulting in internal short-circuiting.

According to the invention, the porous film substrate is not particularly limited so long as it has the properties described above. However, when solvent resistance and unsusceptibility to oxidation and reduction are taken into account, porous films made of polyolefin resins such as polyethylene and polypropylene are suitable.

The reactive polymer layer-supported porous film for battery separator according to the invention is one obtained by supporting a layer of a reactive polymer to a porous film substrate such as those described above, the reactive polymer being obtained by reacting a polyfunctional isocyanate with a crosslinkable polymer having both a reactive group capable of reacting with an isocyanate group and a cationically polymerizable functional group in the molecule thereof and thereby crosslinking the polymer. According to the invention, this reactive polymer layer has a plurality of fine through-holes. In the invention, the term "a layer of a reactive polymer", i.e., "a reactive polymer layer", has the same meaning as "a reactive polymer membrane or film".

The term "crosslinkable polymer" in the invention means a polymer which has both a reactive group capable of reacting with an isocyanate group (hereinafter referred to as isocyanate-reactive group) and a cationically polymerizable functional group in the molecule thereof.

The isocyanate-reactive group in the invention is not particularly limited so long as it is a functional group having active hydrogen capable of reacting with an isocyanate group. Examples thereof include a hydroxyl group, carboxyl group, amino group, imino group, urethane group, and urea group. Preferred of these is a hydroxyl group or a carboxyl group.

The cationically polymerizable functional group preferably is at least one kind selected from a 3-oxetanyl group and an epoxy group (2-oxiranyl group).

According to the invention, the crosslinkable polymer is preferably obtained by the radical copolymerization of a radical-polymerizable monomer having an isocyanate-reactive group such as those shown above (hereinafter referred to as "radical-polymerizable monomer containing an isocyanate-reactive group") and a radical-polymerizable monomer containing a cationically polymerizable group, that is, at least one radical-polymerizable monomer selected from radical polymerizable monomers having a 3-oxetanyl group (hereinafter referred to as "3-oxetanyl group-containing radical-polymerizable monomers") and radical-polymerizable monomers having an epoxy group (hereinafter referred to as "epoxy group-containing radical-polymerizable monomers"), optionally with other radical-polymerizable monomer(s) (hereinafter sometimes referred to as "third radical-polymerizable monomer(s)").

Examples of the radical-polymerizable monomer containing an isocyanate-reactive group include radical-polymerizable monomers containing a carboxyl group, such as (meth)acrylic acid, itaconic acid, and maleic acid, and radical-polymerizable monomers containing a hydroxyl group, such as 2-hydroxyethyl (meth)acrylate, 2-hydroxypropyl (meth)acrylate, 2-hydroxybutyl (meth)acrylate, and 2-hydroxyhexyl (meth)acrylate, in particular, hydroxyalkyl (meth) acrylates. In the invention, the term (meth)acrylate means acrylate or methacrylate.

According to the invention, the 3-oxetanyl group-containing radical-polymerizable monomers to be used preferably are 3-oxetanyl group-containing (meth)acrylates represented by general formula (I):

[Chem. 1]

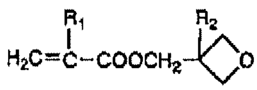

(I)

(in which $R_1$ represents a hydrogen atom or a methyl group, and $R_2$ represents a hydrogen atom or an alkyl group having 1 to 6 carbon atoms).

Examples of such 3-oxetanyl group-containing (meth)acrylates include 3-oxetanylmethyl (meth)acrylate, 3-methyl-3-oxetanylrnethyl (meth)acrylate, 3-ethyl-3-oxetanylmethyl (meth)acrylate, 3-butyl-3-oxetanylmethyl (meth)acrylate, and 3-hexyl-3-oxetanylmethyl (meth)acrylate. These (meth)acrylates may be used alone or in combination of two or more thereof.

As the epoxy group-containing radical-polymerizable monomers, epoxy group-containing (meth)acrylates represented by general formula (II):

[Chem. 2]

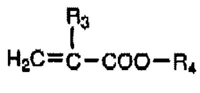

(II)

in which $R_3$ represents a hydrogen atom or a methyl group, and $R_4$ represents an epoxy group-containing group represented by formula (1):

[Chem. 3]

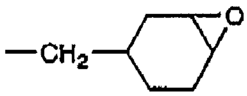

(1)

or formula (2):

[Chem. 4]

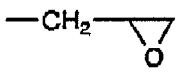

(2)

are preferably used.

Examples of such epoxy group-containing (meth)acrylates include 3,4-epoxycyclohexylmethyl (meth)acrylate and glycidyl (meth)acrylate.

Furthermore, as the third radical-polymerizable monomer(s), according to the invention, it is preferred to use at least one kind selected from (meth)acrylates represented by general formula (III):

[Chem. 5]

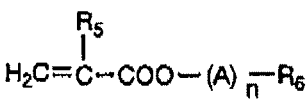

(III)

(in which $R_5$ represents a hydrogen atom or a methyl group; the As may be the same or different and each independently represent an oxyalkylene group having 2 or 3 carbon atoms (preferably, an oxyethylene group or an

oxypropylene group); $R_6$ represents an alkyl group having 1 to 6 carbon atoms or a fluoroalkyl group having 1 to 6 carbon atoms; and n represents an integer of 0 to 3) and vinyl esters represented by general formula (IV):

[Chem. 6]

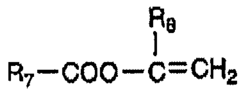

(IV)

(in which $R_7$ represents a methyl group or an ethyl group, and $R_8$ represents a hydrogen atom or a methyl group).

Examples of the (meth)acrylates represented by general formula (III) include methyl (meth)acrylate, ethyl (meth) acrylate, propyl (meth)acrylate, butyl (meth)acrylate, isooctyl (meth)acrylate, 2-ethylhexyl (meth)acrylate, dodecyl (meth) acrylate, 2,2,2-trifluoroethyl (meth)acrylate, and 2,2,3,3-tetrafluoropropyl (meth)acrylate,

Besides the (meth)acrylates shown above, examples of the (meth)acrylates represented by general formula (III) include the following.

[Chem. 7]

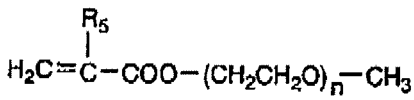

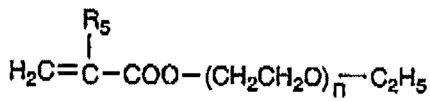

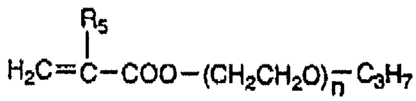

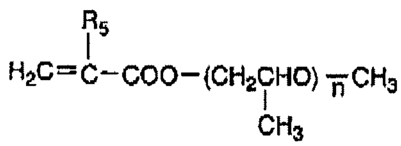

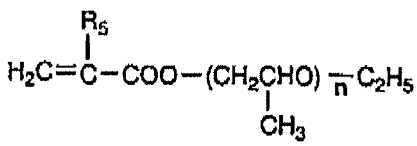

(In the formulae, $R_5$, $R_6$, and n have the same meanings as defined above.)

Examples of the vinyl esters represented by general formula (IV) include vinyl acetate and vinyl propionate.

As stated above, the crosslinkable polymer having both an isocyanate-reactive group and a cationically polymerizable functional group in the molecule thereof can be obtained preferably as a radical copolymer by subjecting a radical-polymerizable monomer containing an isocyanate-reactive group and a radical-polymerizable monomer containing a cationically polymerizable functional group, optionally together with a third radical-polymerizable monomer, to radical copolymerization using a radical polymerization initiator.

This radical copolymerization may be conducted using any polymerization technique selected from solution polymerization, bulk polymerization, suspension polymerization, emulsion polymerization, and the like. However, it is preferred to employ solution polymerization or suspension polymerization from the standpoints of ease of polymerization, molecular-weight regulation, post-treatment, etc.

The radical polymerization initiator is not particularly limited. For example, use may be made of N,N'-azobisisobutyronitrile, dimethyl N,N'-azobis(2-methylpropionate), benzoyl peroxide, lauroyl peroxide, or the like. In this radical copolymerization, a molecular weight regulator such as, e.g., a mercaptan can be used according to the necessity.

When the crosslinkable polymer having both an isocyanate-reactive group and a cationically polymerizable functional group in the molecule thereof is obtained in the invention, the radical-polymerizable monomer containing an isocyanate-reactive group may be used in an amount in the range of 0.1 to 10% by weight, preferably 0.5 to 5% by weight, based on the amount of all monomers.

In case where the amount of the radical-polymerizable monomer containing an isocyanate-reactive group is larger than 10% by weight of the amount of all monomers, the resultant crosslinkable polymer, when reacted and crosslinked with a polyfunctional isocyanate, gives a reactive polymer which has a high crosslink density and is dense. Because of this, the reactive polymer in the electrode/porous film (separator) stack to be finally obtained is less apt to sufficiently swell in an electrolyte solution, making it impossible to obtain a battery having excellent characteristics.

Conversely, in case where the amount of the radical-polymerizable monomer containing an isocyanate-reactive group is less than 0.1% by weight of the amount of all monomers, the reactive polymer obtained by crosslinking the crosslinkable polymer is not sufficiently inhibited from dissolving or diffusing in an electrolyte solution. A large proportion of this reactive polymer hence dissolves in or diffuses into the electrolyte solution. Consequently, sufficient adhesion cannot be obtained between a porous film and electrodes, and a battery having excellent characteristics cannot be obtained in this case also.

When the crosslinkable polymer having both an isocyanate-reactive group and a cationically polymerizable functional group in the molecule thereof is obtained, the radical-polymerizable monomer containing a cationically polymerizable functional group may be used in an amount in the range of 5 to 50% by weight, preferably 10 to 30% by weight, based on the amount of all monomers. Consequently, in the case of obtaining a crosslinkable polymer containing 3-oxetanyl groups, a 3-oxetanyl group-containing radical-polymerizable monomer may be used in an amount in the range of 5 to 50% by weight, preferably 10 to 30% by weight, based on the amount of all monomers. Likewise, in the case of obtaining a crosslinkable monomer containing epoxy groups, an epoxy group-containing radical-polymerizable monomer may be used in an amount in the range of 5 to 50% by weight, preferably 10 to 30% by weight, based on the amount of all monomers.

In the case where a 3-oxetanyl group-containing radical-polymerizable monomer and an epoxy group-containing radical-polymerizable monomer are used in combination, the 3-oxetanyl group-containing radical-polymerizable monomer and the epoxy group-containing radical-polymerizable monomer may be used in a total amount in the range of 5 to 50% by weight, preferably 10 to 30% by weight, based on the amount of all monomers. In this case, it is preferred that the proportion of the epoxy group-containing radical-polymerizable monomer in the sum of the 3-oxetanyl group-containing radical-polymerizable monomer and the epoxy group-containing radical-polymerizable monomer is 90% by weight or less.

In the invention, the crosslinkable polymer has a weight average molecular weight which is 10,000 or higher and is 3,000,000 or lower, preferably 2,500,000 or lower, so that the reactive polymer to be obtained therefrom cationically polymerizes in an electrolyte solution and can sufficiently adhere the electrodes to the porous film (separator) as will be described later. In particular, it is preferred according to the invention that the crosslinkable polymer has a weight average molecular weight in the range of 100,000 to 2,000,000.

The reactive polymer layer-supported porous film for battery separator according to the invention is a film obtained by supporting on a porous film substrate a layer, i,e., a membrane or film, of a reactive polymer obtained by reacting the crosslinkable polymer described above with a polyfunctional isocyanate to crosslink the polymer.

Methods for reacting the crosslinkable polymer having both an isocyanate-reactive group and a cationically polymerizable functional group in the molecule thereof with a polyfunctional isocyanate to crosslink the polymer and thereby obtaining a reactive polymer and supporting a layer of this reactive polymer on a porous film are not particularly limited. For example, the following method may be used. A solution of the crosslinkable polymer is prepared, and a polyfunctional isocyanate is incorporated into the solution in a given amount, i.e., in an amount sufficient to crosslink the crosslinkable polymer. The resultant mixture is supported on a porous film substrate, and the crosslinkable polymer is then reacted with the polyfunctional isocyanate, for example, with heating at a suitable temperature. The polyfunctional isocyanate is thereby reacted with the functional group (e.g., an active-hydrogen group such as a hydroxyl group or a carboxyl group) possessed by the crosslinkable polymer, and the crosslinkable polymer is thereby crosslinked. The reactive polymer layer-supported porous film for battery separator according to the invention may be obtained in this manner.

According to the invention, it is desirable that the reactive polymer obtained by crosslinking the crosslinkable

polymer in the manner described above should have an insoluble content in the range of 20 to 100%. The term insoluble content herein means the proportion of the reactive polymer remaining on a porous film after the porous film having a layer of the crosslinked reactive polymer supported thereon is immersed in an ethylene carbonate/diethyl carbonate (1/1 by volume) mixed solvent at room temperature with stirring for 2 hours and then further immersed in ethyl methyl carbonate, as will be described later.

Methods for obtaining the reactive polymer having an insoluble content in the range of 20 to 100% are not limited. Usually, however, this reactive polymer can be obtained by mixing the crosslinkable polymer with a polyfunctional isocyanate in a suitable solvent so that the amount of the isocyanate groups possessed by the polyfunctional isocyanate is 0.1 to 10 parts by mole, preferably 0.3 to 5 parts by mole, especially preferably 0.5 to 3 parts by mole, per part by mole of the isocyanate-reactive group possessed by the crosslinkable polymer, preferably applying the resultant mixture to a porous film substrate, subsequently drying the mixture, and then heating the dried mixture to cause the crosslinking reaction of the crosslinkable polymer to proceed until the resultant reactive polymer comes to have stable properties.

According to the invention, all the isocyanate-reactive groups in the crosslinkable polymer need not be always reacted with isocyanate groups, so long as the reactive polymer to be obtained has the insoluble content shown above.

Heating/curing temperature and the time period thereof depend on the crosslinkable polymer and polyfunctional isocyanate used. However, those reaction conditions can be determined through experiments. Usually, the crosslinking reaction can be completed by reacting the crosslinkable polymer with the polyfunctional isocyanate with heating at a temperature of 50°C for 48 hours, whereby a reactive polymer having the insoluble content shown above and having stable properties can be obtained.

In case where the reactive polymer has an insoluble content lower than 20%, the following problem arises. When a porous film having a layer of such a reactive polymer supported thereon is stacked together with electrodes and this stack is immersed in an electrolyte solution, then a large proportion of the reactive polymer dissolves or diffuses in the electrolyte solution. Even when this reactive polymer is caused to further undergo cationic polymerization and crosslinked, effective adhesion cannot be obtained between the electrodes and the porous film. In particular, according to the invention, the insoluble content of the reactive polymer is preferably in the range of 30 to 100%, most preferably in the range of 30 to 60%.

The polyfunctional isocyanate in the invention is not particularly limited. For example, use may be made of aromatic, araliphatic, alicyclic, and aliphatic polyfunctional isocyanates such as phenylene diisocyanate, tolylene diisocyanate, diphenylmethane diisocyanate, diphenyl ether diisocyanate, hexamethylene diisocyanate, cyclohexane diisocyanate, xylylene diisocyanate, isophorone diisocyanate, triphenylmethane triisocyanate, and tris(phenyl isocyanate) thiophosphate and polymers of these isocyanates. It is also preferred to use a so-called isocyanate adduct obtained by causing a diisocyanate to add a polyol such as trimethylolpropane.

When the reaction product, i,e., the reactive polymer, obtained by reacting the crosslinkable polymer with a polyfunctional isocyanate in such a manner according to the invention to crosslink the polymer is immersed in an electrolyte solution, the reactive polymer is inhibited from dissolving or diffusing in the electrolyte solution. Consequently, after a layer of this reactive polymer having an insoluble content of 20 to 100% is supported on a porous film and electrodes are stacked on this porous film to obtain an electrode/porous film stack, this stack can be used in the following manner. This stack is introduced into a battery container, and an electrolyte solution containing an electrolyte including a cationic- polymerization catalyst is then poured into this battery container. As a result, at least part of the reactive polymer in the electrode/porous film stack swells in the electrolyte solution or dissolves in the electrolyte solution near the interface between the porous film and each electrode, and further undergoes cationic polymerization due to the cationically polymerizable functional group thereof with the aid of the cationic-polymerization catalyst contained in the electrolyte solution, preferably with the aid of an electrolyte serving also as a cationic-polymerization catalyst. Then, the reactive polymer causes the electrolyte solution to gel and closely and tenaciously adheres the electrodes to the porous film. Thus, an electrode/porous film (namely, separator in the battery to be obtained) laminate can be obtained.

According to the invention, the reactive polymer has been crosslinked beforehand as described above. Consequently, even when immersed in an electrolyte solution, the reactive polymer is prevented or inhibited from dissolving or diffusing in the electrolyte solution and is effectively used for adhering the electrodes to the porous film. Because of this, the electrodes and the porous film can be stably and more tenaciously adhered to each other with the reactive polymer used in a relatively small amount.

On the porous film having a layer of the crosslinked reactive polymer, the reactive polymer is stable and unsusceptible to further reaction or crosslinking in the absence of a cationic-polymerization catalyst. Even when stored over long, the reactive polymer does not alter.

According to the invention, one method for obtaining the reactive polymer layer-supported porous film including a porous film substrate and a reactive polymer layer supported thereon having a plurality of through-holes is, for example, as follows. The crosslinkable polymer and a polyfunctional isocyanate are dissolved in an organic solvent having a boiling point of 100°C or lower to obtain a solution. This solution is applied to a smooth release sheet in an environment having a humidity of 40% or higher and dried to form on the release sheet a layer of a mixture composed of the

crosslinkable polymer and the polyfunctional isocyanate. Subsequently, this layer of a mixture composed of the crosslinkable polymer and the polyfunctional isocyanate is transferred to a porous film with heating and then heated to react the crosslinkable polymer with the polyfunctional isocyanate by the action of the isocyanate-reactive group possessed by the crosslinkable polymer. Accordingly, the crosslinkable polymer is crosslinked to form a reactive polymer layer.

Another method may be used. In this method, the crosslinkable polymer and a polyfunctional isocyanate are dissolved in an organic solvent having a boiling point of 100°C or lower to obtain a solution, and this solution is directly applied to a porous film in an environment having a humidity of 40% or higher and dried to form on the porous film a mixture composed of the crosslinkable polymer and the polyfunctional isocyanate. Subsequently, this layer of a mixture composed of the crosslinkable polymer and the polyfunctional isocyanate is heated to react the crosslinkable polymer with the polyfunctional isocyanate by the action of the isocyanate-reactive group possessed by the crosslinkable polymer. Accordingly, the crosslinkable polymer is crosslinked to form a reactive polymer layer.

In the invention, examples of the organic solvent having a boiling point of 100°C or lower include ethyl acetate and ethanol. When the solution obtained by dissolving the crosslinkable polymer and a polyfunctional isocyanate in such an organic solvent is applied to a release sheet or porous film in an environment having a humidity of 40% or higher to form a layer of the solution on the release sheet or porous film and the organic solvent is vaporized from the layer to dry the layer, then atmospheric moisture condenses and deposits as fine water droplets on the layer due to the heat of vaporization of the organic solvent being vaporized. The fine water droplets reach the release sheet or porous film, while repelling the surrounding solution, to form through-holes. Thus, a film having a plurality of through-holes and being constituted of a mixture of the crosslinkable polymer and the polyfunctional isocyanate is formed on the release sheet or porous film. This film having a plurality of through-holes and being constituted of a mixture of the crosslinkable polymer and the polyfunctional isocyanate is then heated, whereby a film made of a reactive polymer and having a plurality of through-holes is formed on the release sheet or porous film.

Consequently, it is preferred according to the invention that the environment should have a humidity of 50% or higher so that after a solution obtained by dissolving the crosslinkable polymer and a polyfunctional isocyanate in an organic solvent is applied to a release sheet or porous film to form a layer of the solution on the release sheet or porous film, atmospheric moisture is apt to condense and deposit as fine water droplets on the layer. It is also preferred that when the solution obtained by dissolving the crosslinkable polymer and a polyfunctional isocyanate is applied to a release sheet or porous film, the solution should be applied in a thickness of 2 μm or less on a dry basis so that the fine water droplets deposited by condensation on the layer of the solution obtained by dissolving the crosslinkable polymer and a polyfunctional isocyanate reach the release sheet or porous film, while repelling the surrounding solution, to form through-holes.

Furthermore, according to the invention, it is preferred that the through-holes possessed by the reactive polymer layer thus formed has an average pore diameter less than the surface roughness of each electrode. In lithium ion secondary batteries, for example, active-material particles for use in the electrodes have an average particle diameter of about 10 to 20 μm. It is therefore preferred that the average pore diameter of the through-holes possessed by the reactive polymer layer is5 μm or less. In such cases, satisfactory adhesion can be obtained between the active materials (i.e., the electrodes) and the reactive polymer layer, and this satisfactory adhesion changes little with the lapse of time.

The process for battery production of the invention, in which the reactive polymer layer-supported porous film obtained by such a method is used, is explained below.

First, electrodes are stacked or wound together with the reactive polymer layer-supported porous film to obtain an electrode/reactive polymer layer-supported porous film stack. Subsequently, the stack is introduced into a battery container constituted of a metallic can, laminated film, or the like, and terminal welding or the like is conducted if necessary. Thereafter, a given amount of an electrolyte solution containing a cationic-polymerization catalyst dissolved therein is poured into the battery container, and the opening of this battery container is tightly sealed. At least part of the reactive polymer supported on the reactive polymer layer-supported porous film is swelled in the electrolyte solution or dissolved and diffused in the electrolyte solution at least around the interface between the porous film and each electrode, and is crosslinked through cationic polymerization, whereby at least part of the electrolyte solution is caused to gel to adhere the electrodes to the porous film. As a result, a battery including the porous film as a separator can be obtained in which the electrodes have been tenaciously adhered to the separator. The term "at least part of the electrolyte solution is caused to gel" is not particularly limited so long as the gelation is sufficient to produce the effect of the invention. The electrolyte solution may be caused to gel partly or entirely.

In the invention, the reactive polymer functions to cause the electrolyte solution to gel at least around the interface between the porous film and the electrodes to adhere the electrodes to the porous film, on the basis of the crosslinking thereof by cationic polymerization.

In the invention, the reactive polymer can be cationically polymerized and crosslinked even at ordinary temperature although this depends on the structure of the polymer, amount of the polymer supported on the porous film, and kind and amount of the cationic-polymerization catalyst. However, the cationic polymerization can be accelerated by heating. In this case, heating at a temperature of about 40 to 100°C for a period of about 0.5 to 24 hours generally

suffices, although the heat resistance of the materials constituting the battery and productivity should also be taken into account.

In order to swell or to dissolve and diffuse the polymer in an amount sufficient to adhere the electrodes to the porous film, the battery container in which the electrolyte solution has been poured may be allowed to stand at ordinary temperature for about several hours.

In the invention, the electrode/reactive polymer layer-supported porous film stack is not limited so long as the electrodes have been stacked together with the reactive polymer layer-supported porous film. Consequently, the electrode/reactive polymer layer-supported porous film stack to be used is, for example, one for obtaining a negative electrode/porous film/positive electrode configuration, a negative electrode/porous film/positive electrode/porous film configuration, or the like according to the structure and shape of the battery.

The electrolyte solution is a solution prepared by dissolving an electrolyte salt in a suitable solvent. As the electrolyte salt, use can be made of salts composed of: a cation component which is hydrogen, an alkali metal such as lithium, sodium, or potassium, an alkaline earth metal such as calcium or strontium, a tertiary or quaternary ammonium salt, or the like; and an anion component which is an inorganic acid such as hydrochloric acid, nitric acid, phosphoric acid, sulfuric acid, borofluoric acid, hydrofluoric acid, hexafluorophosphoric acid, or perchloric acid or an organic acid such as a carboxylic acid, organic sulfonic acid, or fluorine-substituted organic sulfonic acid. Especially preferred of these are electrolyte salts in which the cation component is an alkali metal ion.

Examples of such electrolyte salts in which the cation component is an alkali metal ion include alkali metal perchlorates such as lithium perchlorate, sodium perchlorate, and potassium perchlorate, alkali metal tetrafluoroborates such as lithium tetrafluoroborate, sodium tetrafluoroborate, and potassium tetrafluoroborate, alkali metal hexafluorophosphates such as lithium hexafluorophosphate and potassium hexafluorophosphate, alkali metal trifluoroacetates such as lithium trifluoroacetate, and alkali metal trifluoromethanesulfonates such as lithium trifluoromethanesulfonate.

Especially in the case of obtaining a lithium ion secondary battery according to the invention, suitable examples of the electrolyte salt to be used are lithium hexafluorophosphate, lithium tetrafluoroborate, lithium perchlorate, and the like.

The solvent to be used for the electrolyte salt in the invention can be any solvent in which the electrolyte salt dissolves. Usable nonaqueous solvents include cyclic esters such as ethylene carbonate, propylene carbonate, butylene carbonate, and γ-butyralactone, ethers such as tetrahydrofuran and dimethoxyethane, and chain esters such as dimethyl carbonate, diethyl carbonate, and ethyl methyl carbonate. These solvents may be used alone or as a mixture of two or more thereof. Although the electrolyte salt is suitably determined according to the kind and amount of the solvent to be used, the salt is generally used in such an amount as to result in a concentration thereof of 1 to 50% by weight in the gel electrolyte to be obtained.

In the invention, it is preferred to use an onium salt as the cationic-polymerization catalyst. Examples of the onium salt include onium salts composed of a cation component such as an ammonium salt, phosphonium salt, arsonium salt, stibonium salt, or iodonium salt and an anion component such as a tetrafluoroborate, hexafluorophosphate, trifluoromethanesulfoante, or perchlorate,

However, of the electrolyte salts shown above, lithium tetrafluoroborate and lithium hexafluorophosphate per se function also as a cationic-polymerization catalyst. It is therefore especially preferred according to the invention to use these lithium salts as a cationic-polymerization catalyst functioning also as an electrolyte salt. In this case, either lithium tetrafluoroborate or lithium hexafluorophosphate may be used alone, or the two salts may be used in combination.

## EXAMPLE

The invention will be explained below by reference to an Example. However, the invention should not be construed as being limited by the following Example in any way. In the following, properties of porous film substrates and battery characteristics were evaluated in the manners shown below.

### Thickness of Porous Film

The thickness of a porous film was determined through a measurement with a 1/10,000 mm thickness gauge and based on a photograph of a section of the porous film taken with a scanning electron microscope at a magnification of 10,000.

### Porosity of Porous Film

The porosity of a porous film was calculated using the following equation from the weight W (g) per unit area S ($cm^2$) of the porous film, the average thickness t (cm) thereof, and the density d ($g/cm^3$) of the resin constituting the porous film.

$$\text{Porosity (\%)} = (1-(W/S/t/d))\times 100$$

Air Permeability of Porous Film

The air permeability of a porous film was determined according to JIS P 8117.

Puncture Strength

A puncture test was conducted using compression tester KES-G5, manufactured by Kato Tech Co., LTD. The maximum load was read from a load-deformation curve obtained in the measurement and was taken as the puncture strength. A needle having a diameter of 1.0 mm and a radius of curvature of the tip of 0.5 mm was used to conduct the test at a rate of 2 cm/sec.

Insoluble Content of Reactive Polymer

A reactive polymer layer-supported porous film in which the reactive polymer layer had been supported in a known amount A was weighed to measure the weight B thereof. Subsequently, this reactive polymer layer-supported porous film was immersed in an ethylene carbonate/diethyl carbonate (1/1 by volume) mixed solvent at room temperature for 2 hours, then immersed in ethyl methyl carbonate to rinse the film, and air-dried. Thereafter, the reactive polymer layer-supported porous film thus treated was weighed to measure the weight C thereof. The insoluble content of the reactive polymer was calculated using the following equation.

REFERENCE EXAMPLE 1

Preparation of Electrode Sheets

$$\text{Insoluble content (\%)} = ((A-(B-C))/A)\times 100$$

Eighty-five parts by weight of lithium cobalt oxide (Cellseed C-10, manufactured by Nippon Chemical Industrial Co., Ltd.) as a positive-electrode active material was mixed with 10 parts by weight of acetylene black (Denka Black, manufactured by Denki Kagaku Kogyo K.K.) as a conduction aid material and 5 parts by weight of a vinylidene fluoride resin (KF Polymer L #1120, manufactured by Kureha Chemical Industry Co., Ltd.) as a binder. This mixture was slurried with N-methyl-2-pyrrolidone so as to result in a solid concentration of 15% by weight

This slurry was applied in a thickness of 200 μm to an aluminum foil having a thickness of 20 μm (current collector) and dried at 80°C for 1 hour and then at 120°C for 2 hours. The coated foil was pressed with a roller press to prepare a positive-electrode sheet having an active-material layer with a thickness of 100 μm.

Eighty parts by weight of mesocarbon microbeads (MCMB 6-28, manufactured by Osaka Gas Chemical Co., Ltd.) as a negative-electrode active material were mixed with 10 parts by weight of acetylene black (Denka Black, manufactured by Denki Kagaku Kogyo K.K.) as a conduction aid material and 10 parts by weight of a vinylidene fluoride resin (KF Polymer L #1120, manufactured by Kureha Chemical Industry Co., Ltd.) as a binder. This mixture was slurried with N-methyl-2-pyrrolidone so as to result in a solid concentration of 15% by weight.

This slurry was applied in a thickness of 200 μm to a copper foil having a thickness of 20 μm (current collector) and dried at 80°C for 1 hour and then at 120°C for 2 hours. The coated foil was pressed with a roller press to prepare a negative-electrode sheet having an active-material layer with a thickness of 100 μm.

Discharge Characteristics of Battery Obtained in Example or Comparative Example

The sealed laminate type lithium ion secondary battery obtained in the following Example or Comparative Example was charged and discharged at a rate of 0.2 CmA three times and then repeatedly subjected to charge/discharge at 1 CmA 30 times. Battery characteristics were evaluated in terms of the percentage (%) of the 1 CmA discharge

capacity measured in the 30th cycle to the 1 CmA discharge capacity measured in the first cycle.

PRODUCTION EXAMPLE 1

Production of Crosslinkable Polymer A

The following were introduced: 28.0 g of methoxydipropylene glycol acrylate, 45.0 g of methyl methacrylate, 25.0 g of (3-ethyl-3-oxetanyl)methyl methacrylate, 2.0 g of 4-hydroxybutyl acrylate, 67 g of ethyl acetate, and 0.20 g of N,N'-azobisisobutyronitrile. The contents were stirred and mixed for 30 minutes while introducing nitrogen gas. Thereafter, radical polymerization was conducted at 70°C.

At the time when about 1 hour had passed, the viscosity of the reaction mixture began to increase with progress of the radical polymerization. The polymerization was continued for further 8 hours under the same conditions. Thereafter, the reaction mixture was cooled to about 40°C, and 0.10 g of N,N'-azobisisobutyronitrile was added again thereto. This mixture was heated again to 70°C to further conducted post-polymerization for 8 hours. Thereafter, the reaction mixture was cooled to about 40°C, and 233 g of ethyl acetate was added thereto. The resultant mixture was stirred and mixed until the whole mixture became homogeneous. Thus, an ethyl acetate solution of a crosslinkable polymer was obtained. This polymer was washed by precipitation with methanol twice to purify the polymer and thereby obtain a crosslinkable polymer A.

EXAMPLE 1

To the crosslinkable polymer A were added ethyl acetate and a polyfunctional isocyanate (hexamethylene diisocyanate/trimethylolpropane adduct; ethyl acetate solution; solid content, 75%; Coronate HL, manufactured by Nippon Polyurethane Industry Co., Ltd.; added in an amount of 0.9% by weight based on the crosslinkable polymer A). The resultant mixture was stirred at room temperature to obtain a homogeneous crosslinkable-polymer solution having a concentration of 8% by weight.

The crosslinkable-polymer solution thus obtained, which contained the crosslinking agent, was applied to an OPP film with a wire-wound bar #3 under the conditions of room temperature (25°C) and a humidity of 55%. Thereafter, the solution applied was allowed to dry naturally to volatilize the ethyl acetate. As a result, a milk-white film including the crosslinkable polymer A and the polyfunctional isocyanate was obtained. The OPP film to which the film including the crosslinkable polymer A and the polyfunctional isocyanate had been supported in the manner shown above was laminated to one side of a porous polyethylene resin film substrate (thickness, 16 μm; porosity, 60%; air permeability, 80 sec/100 cc; puncture strength, 2.0 N) with a hot roll heated at 90°C. This laminate was placed in a 90°C thermostatic chamber for 48 hours to react the hydroxybutyl acrylate component of the crosslinkable polymer supported on the porous film with the crosslinking agent (polyfunctional isocyanate) and thereby crosslink the crosslinkable polymer. Thereafter, the OPP film was peeled off to obtain a reactive polymer layer-supported porous film, which had a reactive polymer layer supported on one side thereof. The supported reactive polymer had a thickness of 0.5 μm, and the coating density was 0.5 g/m$^2$. This reactive polymer layer-supported porous film was examined for air permeability (Gurley value), and the air permeability thereof was found to be 300 s/100 cc. It was thus ascertained that through-holes were present therein in such a degree that air was permeable. The presence of a plurality of through-holes was ascertained also through an SEM examination. The SEM examination revealed that the pore diameters of the through-holes were about 2μm at the most,

The negative-electrode sheet obtained in Reference Example 1, the reactive polymer layer-supported porous film, and the positive-electrode sheet obtained in Reference Example 1 were stacked in this order. The resultant stack was introduced into an aluminum laminate package, and this package, except an electrolyte solution introduction port, was heat-sealed. The package and contents in this state were vacuum-dried at 80°C for 2 hours. After the vacuum drying, the package was transferred to a gloved box the atmosphere in which had been replaced with argon having a dew point of -60°C or lower. An electrolyte solution constituted of an ethylene carbonate/diethyl carbonate (1/2 by volume) mixed solvent containing lithium hexafluorophosphate dissolved therein in a concentration of 1.4 mol/L was poured into the package, which was then sealed. Thus, a lithium ion secondary battery was assembled.

Thereafter, the battery was allowed to stand at 25°C for 12 hours to infiltrate the electrolyte solution into the reactive polymer. The battery was then heated at 50°C for 24 hours to cationically polymerize and crosslink the reactive polymer. The positive-electrode sheet was thereby adhered to the porous film (separator) and the electrolyte solution was partly caused to gel. Thus, a sealed laminate type battery was obtained.

This battery was charged and discharged twice at 0.2 CmA, and then examined for discharge capacity in a test in which the battery was subjected to 0.2 CmA charge, 1 CmA discharge, 0.2 CmA discharge, 0.2 CmA charge, and 2 CmA discharge in this order. The proportion of the discharge capacity measured in the 1 CmA discharge to the discharge capacity measured in the second 0.2 CmA discharge was 97%, and the proportion of the discharge capacity

measured in the 2 CmA discharge to the discharge capacity measured in the second 0.2 CmA discharge was 76%.

COMPARATIVE EXAMPLE 1

A reactive polymer layer-supported porous film was obtained in the same manner as in Example 1, except that xylene was used in place of the ethyl acetate for dilution. The film obtained on an OPP film in the procedure, which included a crosslinkable polymer and a polyfunctional isocyanate, remained transparent. The reactive polymer supported on the porous film had a thickness of 0.5 μm, and the coating density was 0.5 $g/m^2$. The reactive polymer layer-supported porous film was examined for Gurley value. As a result, the count remained zero even at 30 minutes after initiation of the examination. The Gurley value thereof was virtually infinite. Furthermore, an SEM examination revealed that there were no through-holes in the reactive polymer layer.

Subsequently, this reactive polymer layer-supported porous film was used to obtain a sealed laminate type battery in the same manner as in Example 1 and examined for discharge capacity. In this battery, the proportion of the discharge capacity measured in the 1 CmA discharge to the discharge capacity measured in the second 0.2 CmA discharge was 93%, and the proportion of the discharge capacity measured in the 2 CmA discharge to the discharge capacity measured in the second 0.2 CmA discharge was 61%.

While the invention has been described in detail and with reference to specific embodiments thereof, it will be apparent to one skilled in the art that various changes and modifications can be made therein without departing from the spirit and scope thereof.

This application is based on a Japanese patent application filed on October 26, 2007 (Application No. 2007-278614), the entire contents thereof being herein incorporated by reference.

Further, all references cited herein are incorporated by reference in their entirety.

INDUSTRIAL APPLICABILITY

According to the invention, when an electrode/reactive polymer layer-supported porous film stack obtained by stacking electrodes on a reactive polymer layer-supported porous film is introduced into a battery container and an electrolyte solution containing a cationic-polymerization catalyst is poured into the battery container, then at least part of the reactive polymer swells in the electrolyte solution or dissolves in the electrolyte solution at least around the interface between the porous film and the electrodes to undergo cationic polymerization. As a result, a battery in which the porous film (separator) has been tenaciously adhered to the electrodes can be obtained. Furthermore, since the reactive polymer layer has a plurality of fine through-holes, the reactive polymer layer has improved wettability by the electrolyte solution. A battery having excellent high-rate characteristics can hence be obtained.

## Claims

1. A reactive polymer layer-supported porous film for battery separator, comprising:

   a porous film substrate; and
   a reactive polymer layer supported on the porous film substrate, said reactive polymer layer having a thickness of 2 μm or less and being obtained by a crosslinking reaction between a polyfunctional isocyanate and a crosslinkable polymer having both a reactive group capable of reacting with an isocyanate group and a cationically polymerizable functional group in the molecule thereof,
   wherein the reactive polymer layer has a plurality of through-holes having an average pore diameter of 5 μm or less.

2. The reactive polymer layer-supported porous film for battery separator according to claim 1, wherein the reactive group capable of reacting with an isocyanate group is a hydroxyl group, and the cationically polymerizable functional group is at least one kind obtained from a 3-oxetanyl group and an epoxy group.

3. A process for producing a battery, said process comprising:

   stacking electrode on the reactive polymer layer-supported porous film according to claim 1 or 2 to obtain an electrode/reactive polymer layer-supported porous film stack;
   introducing the electrode/reactive polymer layer-supported porous film stack into a battery container; and
   pouring an electrolyte solution containing a cationic-polymerization catalyst into the battery container, whereby at least part of the reactive polymer is swelled in the electrolyte solution or dissolved in the electrolyte solution

at least around the interface between the porous film and the electrode to undergo cationic polymerization, thereby adhering the porous film to the electrode.

4. The process for producing a battery according to claim 3, wherein the cationic-polymerization catalyst is an onium salt.

5. The process for producing a battery according to claim 4, wherein the electrolyte solution contains at least one kind selected from lithium hexafluorophosphate and lithium tetrafluoroborate, as an electrolyte salt serving also as a cationic-polymerization catalyst.

**INTERNATIONAL SEARCH REPORT**

International application No.
PCT/JP2008/069277

A. CLASSIFICATION OF SUBJECT MATTER
*H01M2/16*(2006.01)i, *C08J9/36*(2006.01)i, *H01M4/02*(2006.01)i, *H01M4/04* (2006.01)i, *H01M10/40*(2006.01)i

According to International Patent Classification (IPC) or to both national classification and IPC

B. FIELDS SEARCHED

Minimum documentation searched (classification system followed by classification symbols)
H01M2/16, C08J9/36, H01M4/02, H01M4/04, H01M10/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-128069 A (Nitto Denko Corp.), 18 May, 2006 (18.05.06), Claims; Par. No. [0092]; examples & EP 1819000 A1 & WO 2006/038362 A1 & KR 10-2007-0057895 A & CN 101032042 A | 1-5 |
| Y | JP 2006-12560 A (Nitto Denko Corp.), 12 January, 2006 (12.01.06), Claims; examples (Family: none) | 1-5 |
| Y | JP 10-172606 A (Mitsubishi Electric Corp.), 26 June, 1998 (26.06.98), Claim 1; Par. Nos. [0008], [0017], [0042] & US 6124061 A & US 6322599 B1 & US 2002/0018930 A1 & EP 848445 A1 & DE 69720386 D & DE 69720386 T | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 January, 2009 (15.01.09) | Date of mailing of the international search report<br>27 January, 2009 (27.01.09) |
| Name and mailing address of the ISA/<br>Japanese Patent Office<br>Facsimile No. | Authorized officer<br>Telephone No. |

Form PCT/ISA/210 (second sheet) (April 2007)

**INTERNATIONAL SEARCH REPORT**

International application No.
PCT/JP2008/069277

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-86162 A (Teijin Ltd.), 20 March, 2003 (20.03.03), Claim 1; Par. Nos. [0017] to [0019] (Family: none) | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10177865 A
- JP 10189054 A
- JP 10172606 A
- JP 2007278614 A